# EUROPEAN PATENT APPLICATION

(11) **EP 4 742 510 A1**
(43) Date of publication of application: **13.05.2026**
(21) Application number: 23943947.4
(22) Date of filing: 07.07.2023
(51) Int. Cl.: H02K 7/116, B60K 1/02, H02K 5/22, H02K 11/33, H02M 7/48

(54) **DRIVE UNIT**

(71) Applicant: Nissan Motor Co. Ltd, Yokohama-shi, Kanagawa 220-8623 (JP)
(72) Inventor: FUKUHARA, Yusuke, Atsugi-shi, Kanagawa 243-0123 (JP); SATO, Seiichi, Atsugi-shi, Kanagawa 243-0123 (JP)
(74) Representative: Hoefer & Partner Patentanwälte mbB
(86) International application number: PCT/JP2023/025300
(87) International publication number: WO 2025/013133

(57) **Abstract**

A drive unit to be mounted on a vehicle is unitized with an inverter, a motor configured to receive electric power from the inverter, and a gear box having a shaft gear provided on a shaft of the motor. The drive unit comprises a gear chamber provided in the gear box for accommodating the shaft gear having a diameter smaller than an outer diameter dimension of the motor, and an accommodating chamber provided in the gear box and formed as a space different from the gear chamber due to a dimensional difference between the outer diameter dimension of the motor and an outer diameter dimension of the shaft gear. At least a part of components of the inverter is accommodated in the accommodating chamber.

## Description

### TECHNICAL FIELD

The present invention relates to a drive unit.

### BACKGROUND ART

JP2017-184523A discloses a drive device.

The drive device includes a left electric motor and a right electric motor. A speed reducer housing of a speed reducer unit is provided between the left electric motor and the right electric motor. An inverter housing of an inverter unit is provided on an upper portion of the speed reducer housing. The inverter housing accommodates components constituting an inverter.

### SUMMARY OF INVENTION

### PROBLEM TO BE SOLVED BY THE INVENTION

In the drive device, since the inverter unit is provided above the speed reducer unit, there is a problem that the size of the drive device is increased.

The present invention has been made in view of such a problem, and an object of the present invention is to provide a drive unit which may be downsized.

### MEANS FOR SOLVING THE PROBLEM

According to an aspect of the present invention, provided is a drive unit to be mounted on a vehicle, the drive unit including: an inverter; a motor configured to receive supply of electric power from the inverter; a gear box having a shaft gear provided on a shaft of the motor, the inverter, the motor, and the gear box being unitized; a gear chamber provided in the gear box and configured to accommodate the shaft gear having a diameter smaller than an outer diameter dimension of the motor; and an accommodating chamber provided in the gear box and formed as a space different from the gear chamber due to a dimensional difference between the outer diameter dimension of the motor and an outer diameter dimension of the shaft gear, in which at least a part of components of the inverter is accommodated in the accommodating chamber.

In the drive unit, the accommodating chamber is formed in the gear box as a space different from the gear chamber due to a dimensional difference between the outer diameter dimension of the motor and the outer diameter dimension of the shaft gear. At least a part of the components of the inverter is accommodated in the accommodating chamber. Therefore, the drive unit may be downsized as compared with a case where all the components of the inverter are arranged outside the gear box.

### BRIEF DESCRIPTION OF DRAWINGS

[FIG. 1] FIG. 1 is a perspective view illustrating a drive unit according to the present embodiment, and illustrates a state in which a cover of a gear box is removed.
[FIG. 2] FIG. 2 is a sectional view of a main part of the drive unit according to the present embodiment, illustrating a state in which a motor housing is cut.
[FIG. 3] FIG. 3 is a schematic diagram used for describing the drive unit according to the present embodiment.
[FIG. 4] FIG. 4 is a schematic diagram used for describing a drive unit according to a first modification of the present embodiment.
[FIG. 5] FIG. 5 is a perspective view illustrating a drive unit according to a second modification of the present embodiment, and illustrates a state in which a cover of a gear box is removed.
[FIG. 6] FIG. 6 is a schematic diagram used for describing a function of a reservoir part of the drive unit according to the second modification of the present embodiment.
[FIG. 7] FIG. 7 is a schematic diagram used for describing a function of cooling a semiconductor device of the drive unit according to the second modification of the present embodiment.
[FIG. 8] FIG. 8 is a schematic diagram used for describing a function of cooling a heat generating component of the drive unit according to the second modification of the present embodiment.

### DESCRIPTION OF EMBODIMENTS

### <First Embodiment>

Hereinafter, an embodiment of the present invention will be described with reference to the drawings.

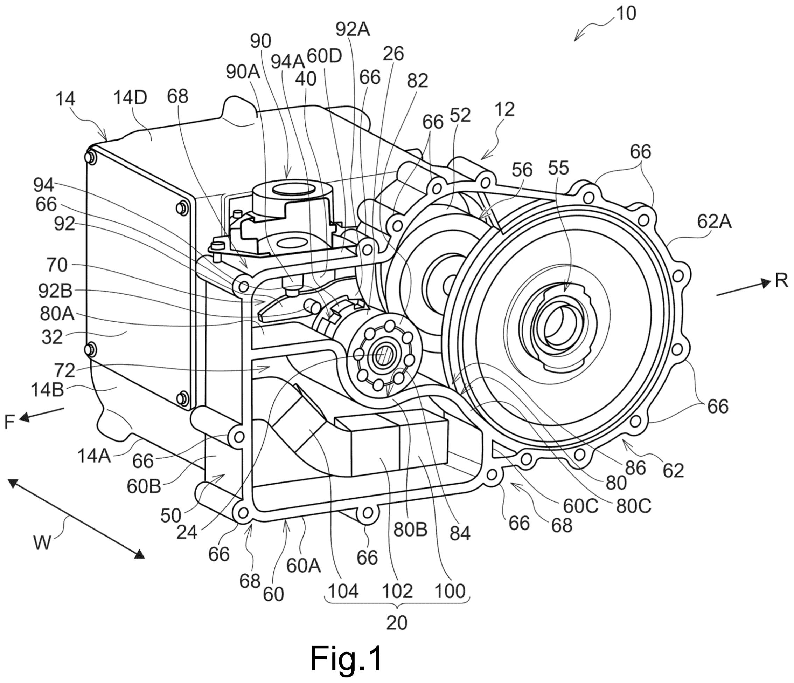

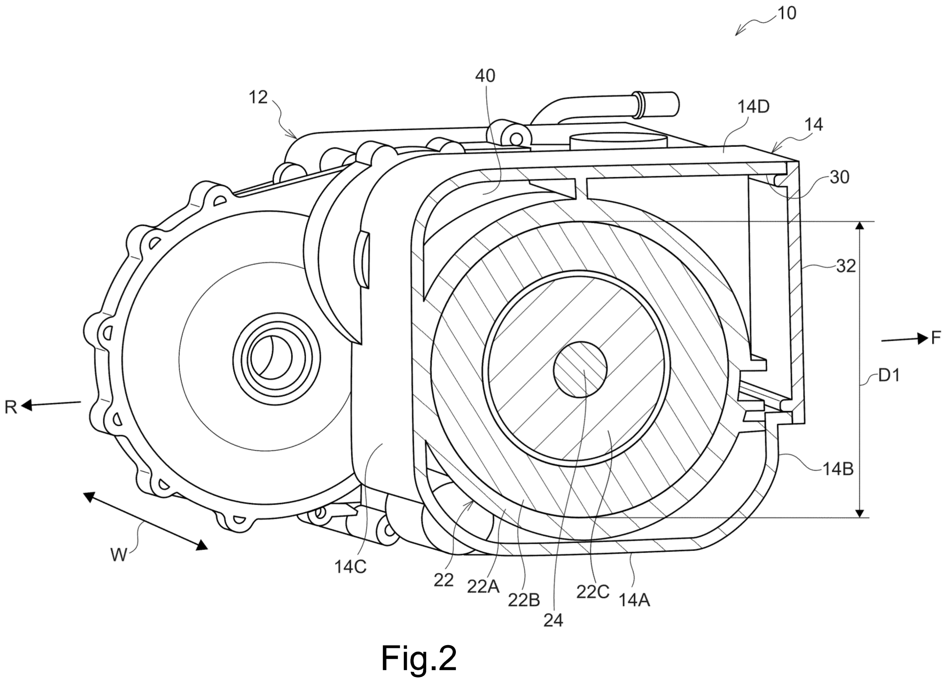

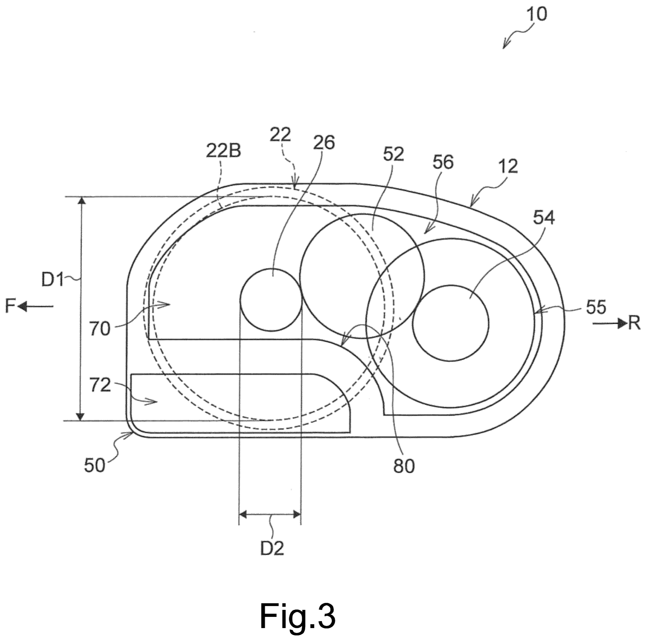

FIG. 1 is a perspective view illustrating a drive unit 10 according to the present embodiment, and illustrates a state in which a cover (not illustrated) of a gear box 12 is removed. FIG. 2 is a cross-sectional view of a main part of the drive unit 10 according to the present embodiment, illustrating a state in which a motor housing 14 is cut. FIG. 3 is a schematic diagram used for describing the drive unit 10 according to the present embodiment.

As illustrated in FIG. 1, the drive unit 10 is used in, for example, an electric vehicle. The drive unit 10 is mounted on a vehicle and drives drive wheels provided in the vehicle. The drive unit 10 is disposed on a vehicle front F side and drives front wheels of the vehicle.

The drive unit 10 includes an inverter 20, a motor 22 (see FIG. 2) that receives supply of electric power from the inverter 20, and the gear box 12 having a shaft gear 26 provided on a shaft 24 of the motor 22. The inverter 20, the motor 22 (see FIG. 2), and the gear box 12 are unitized.

The drive unit 10 is disposed such that the shaft 24 extending from the motor 22 extends in a vehicle width direction W in a state of being mounted on a vehicle. In the drive unit 10, a differential gear 55 (see FIG. 3) that drives a drive shaft (not illustrated) that drives drive wheels is disposed on a vehicle rear R side with respect to the shaft 24 of the motor 22.

### (Motor)

As illustrated in FIG. 2, the motor 22 is accommodated in the motor housing 14 that is rectangular. The motor housing 14 has a motor housing bottom surface 14A and a motor housing front wall surface 14B extending from an edge of the motor housing bottom surface 14A on the vehicle front F side. In addition, the motor housing 14 has a motor housing rear wall surface 14C extending from an edge of the motor housing bottom surface 14A on the vehicle rear R side, and a motor housing top surface 14D that couples the motor housing front wall surface 14B and the motor housing rear wall surface 14C.

The motor housing front wall surface 14B has a front opening 30, and the front opening 30 is closed by a lid body 32.

The motor 22 includes a motor case 22A. The motor case 22A is coupled to the motor housing 14 and holds the motor 22 on the motor housing 14. In the motor case 22A, a stator 22B is provided along an inner wall surface of the motor case 22A. A rotor 22C is rotatably provided inside the stator 22B. The rotor 22C is provided with the shaft 24. The shaft 24 extends into the gear box 12 through a partition wall 40 that partitions the motor housing 14 and the gear box 12. In the present embodiment, an outer diameter dimension D1 of the motor 22 is determined by an outer diameter of the stator 22B.

The motor 22 is a so-called rotating electrical machine having a function as an electric motor that receives supply of electric power and rotates the drive wheels and a function as a generator that receives a rotational force from the drive wheels and generates (regenerates) electric power.

### (Gear Box)

As illustrated in FIG. 1, the gear box 12 includes a gear box housing 50. The gear box housing 50 is provided with the shaft gear 26 provided on the shaft 24 of the motor 22, an intermediate gear 52 meshing with the shaft gear 26, and a final gear 54 (see FIG. 3) meshing with the intermediate gear 52.

The gear box 12 includes a gear mechanism 56 including the shaft gear 26, the intermediate gear 52, and the final gear 54. The shaft gear 26, the intermediate gear 52, and the final gear 54 constituting the gear mechanism 56 are arranged in a horizontal direction. The intermediate gear 52 has a larger diameter than the shaft gear 26. The gear mechanism 56 constitutes a speed reduction mechanism. The gear mechanism 56 may constitute a speed increasing mechanism.

The final gear 54 transmits a driving force to the differential gear 55 (see FIG. 3) constituting a differential device. The differential gear 55 drives the drive shaft (not illustrated).

The gear box housing 50 includes a box body 60 that accommodates the shaft gear 26 and a box extension 62 extending from the box body 60 to the vehicle rear R side. The box extension 62 has a shape corresponding to outer shapes of the intermediate gear 52 and the differential gear 55 (see FIG. 3). The box extension 62 has a peripheral wall 62A along outer peripheries of the intermediate gear 52 and the differential gear 55.

The box body 60 and the box extension 62 are provided with bolt insertion parts 66 through which bolts for fastening the motor housing 14 and the gear box housing 50 and attaching a cover (not illustrated) to the gear box housing 50 are inserted.

In order to increase coupling rigidity between the gear box housing 50 and the motor housing 14, the bolt insertion parts 66 are disposed at corners 68 of the box body 60 of the gear box housing 50.

The box body 60 has a body bottom surface 60A, a body front wall surface 60B that extends from an edge of the body bottom surface 60A on the vehicle front F side, and a body rear wall surface 60C that couples an edge of the body bottom surface 60A on the vehicle rear R side and the peripheral wall 62A of the box extension 62. In addition, the box body 60 has a body top surface 60D that couples the body front wall surface 60B and the peripheral wall 62A of the box extension 62. Accordingly, the box body 60 is formed in a rectangular shape in a cross section, a part of which in contact with the box extension 62 is lost.

The body bottom surface 60A of the box body 60 extends on an extension of the motor housing bottom surface 14A (see FIG. 2) of the motor housing 14. The body front wall surface 60B of the box body 60 extends to a portion on the vehicle rear R side with respect to the motor housing front wall surface 14B of the motor housing 14. The body top surface 60D of the box body 60 extends to a height position lower than the motor housing top surface 14D of the motor housing 14.

The gear box 12 includes a gear chamber 70 in which the shaft gear 26 having a diameter smaller than the outer diameter dimension D1 (see FIGS. 2 and 3) of the motor 22 is accommodated. In addition, the gear box 12 includes an accommodating chamber 72 formed as a space different from the gear chamber 70 due to a dimensional difference between the outer diameter dimension D1 of the motor 22 and an outer diameter dimension D2 of the shaft gear 26 (see FIG. 3).

Specifically, as illustrated in FIG. 3, the outer diameter dimension D2 of the shaft gear 26 is smaller than the outer diameter dimension D1 of the motor 22. Therefore, in the gear box housing 50 formed in accordance with the motor housing 14, a space is present between the shaft gear 26 and the wall surface of the gear box housing 50 due to a dimensional difference between the outer diameter dimension D1 of the motor 22 and the outer diameter dimension D2 of the shaft gear 26. Further, the accommodating chamber 72 is formed in this space.

As illustrated in FIG. 1, the accommodating chamber 72 is surrounded by the body bottom surface 60A, the body front wall surface 60B, and the body rear wall surface 60C of the gear box housing 50, and a partition wall 80 that couples the body rear wall surface 60C and the body front wall surface 60B. Accordingly, the accommodating chamber 72 is located below the shaft gear 26 and is formed at a portion at a corner side of the gear box 12.

The partition wall 80 is formed with a partition wall extension 80A that extends from an intermediate part of the body front wall surface 60B toward the shaft gear 26 along the body bottom surface 60A, and a partition wall curved part 80B that extends from the partition wall extension 80A and is curved. In addition, the partition wall 80 is formed with a partition wall inclined part 80C that is inclined with the partition wall curved part 80B and the body rear wall surface 60C being coupled to each other.

The partition wall curved part 80B is formed with a circular arc shaped cross-section curved along the shaft gear 26. The partition wall curved part 80B supports, from below, a bearing 82 that rotatably supports a distal end of the shaft 24.

The partition wall curved part 80B is formed such that a lower part of a central axis of the shaft 24 is lowest. Accordingly, a first reservoir part 84 that reserves lubricating oil for lubricating each gear of the gear mechanism 56 is formed by the partition wall curved part 80B on a surface of the partition wall 80 on a gear chamber 70 side. The lubricating oil reserved in the first reservoir part 84 is scooped up by the rotating shaft gear 26.

The partition wall inclined part 80C extends obliquely downward from the partition wall curved part 80B toward the body rear wall surface 60C. Accordingly, a second reservoir part 86 for reserving lubricating oil is formed on the surface of the partition wall 80 on the gear chamber 70 side by the partition wall inclined part 80C. The lubricating oil reserved in the second reservoir part 86 is scooped up by the rotating final gear 54 or the rotating differential gear 55.

A parking lock actuator 90 is provided on the body top surface 60D of the box body 60 of the gear box 12. An actuation shaft 90A of the parking lock actuator 90 extends into the gear chamber 70 and engages with an actuation plate 92. An engagement claw 92A that engages with teeth 94A of a lock gear 94 provided at the shaft 24 is provided at a distal end of the actuation plate 92.

When the parking lock actuator 90 forms a locked state, the actuation shaft 90A rotates the actuation plate 92 about a support shaft 92B, and the engagement claw 92A is inserted between the teeth 94A of the lock gear 94. Accordingly, the parking lock actuator 90 prevents the rotation of the shaft gear 26.

When the parking lock actuator 90 forms an unlocked state, the actuation shaft 90A rotates the actuation plate 92, and the engagement claw 92A is pulled out from between the teeth 94A of the lock gear 94. Accordingly, the parking lock actuator 90 allows the rotation of the shaft gear 26.

At least a part of the components constituting the inverter 20 is accommodated in the accommodating chamber 72.

The inverter 20 includes a smoothing capacitor 100 that smooths a voltage supplied from a battery via a high-voltage unit. In addition, the inverter 20 includes a semiconductor device 102 that forms a three-phase alternating current for driving the motor 22 constituted by a three-phase motor based on the voltage smoothed by the smoothing capacitor 100. The inverter 20 further includes a three-phase electrode part 104 for outputting the three-phase alternating current formed by the semiconductor device 102 to the motor 22.

In the drive unit 10 according to the present embodiment, all of the smoothing capacitor 100, the semiconductor device 102, and the three-phase electrode part 104 constituting the inverter 20 are accommodated in the accommodating chamber 72.

In the drive unit 10 according to the present embodiment, a case where all of the components of the inverter 20 are accommodated in the accommodating chamber 72 will be described, but the drive unit 10 is not limited to this configuration. In the drive unit 10 according to the present embodiment, for example, a part of the components of the inverter 20 may be accommodated in the accommodating chamber 72.

Further, in the accommodating chamber 72, the smoothing capacitor 100 is disposed on the vehicle rear R side with respect to the semiconductor device 102. In addition, the three-phase electrode part 104 is disposed on the vehicle front F side with respect to the semiconductor device 102. The three-phase electrode part 104 constitutes, for example, a bus bar.

In the drive unit 10, the power supplied from the battery is received from a PN terminal of the semiconductor device 102 via the smoothing capacitor 100. In addition, the drive unit 10 outputs output from a UVW terminal of the semiconductor device 102 to the motor 22 via the three-phase electrode part 104 constituting a bus bar. Therefore, wiring is easily routed compared to a case where the components of the inverter 20 are arranged in the order of, for example, the semiconductor device 102, the smoothing capacitor 100, and the three-phase electrode part 104.

In the accommodating chamber 72, the smoothing capacitor 100, the semiconductor device 102, and the three-phase electrode part 104 are arranged in this order from the vehicle rear R side, and the smoothing capacitor 100 and the PN terminal of the semiconductor device 102 to which the smoothing capacitor 100 is connected are disposed on the vehicle rear R side.

Therefore, in the present embodiment in which the drive unit 10 is disposed on the vehicle front F side, a distance from the battery disposed on the vehicle rear R side with respect to the drive unit 10 to the PN terminal of the semiconductor device 102 can be shortened, and wiring extending from the battery may be shortened.

When the drive unit 10 is disposed on the vehicle rear R side, the arrangement of the smoothing capacitor 100 and the three-phase electrode part 104 is interchanged.

### (Functions and Effects)

As described above, the drive unit 10 according to the first embodiment is a unit to be mounted on a vehicle. The drive unit 10 is a unit in which the inverter 20, the motor 22 that receives supply of electric power from the inverter 20, and the gear box 12 having the shaft gear 26 provided on the shaft 24 of the motor 22 are unitized. The drive unit 10 includes the gear chamber 70 which is provided in the gear box 12 and in which the shaft gear 26 having a diameter smaller than the outer diameter dimension D1 of the motor 22 is accommodated. The drive unit 10 includes the accommodating chamber 72 provided in the gear box 12 and formed as a space different from the gear chamber 70 due to a dimensional difference between the outer diameter dimension D1 of the motor 22 and the outer diameter dimension D2 of the shaft gear 26. At least a part of the components of the inverter 20 is accommodated in the accommodating chamber 72.

Accordingly, an excess space generated in the gear box housing 50 due to the dimensional difference between the outer diameter dimension D1 of the motor 22 and the outer diameter dimension D2 of the shaft gear 26 can be effectively used as the accommodating chamber 72. Further, at least a part of components of the inverter 20 is accommodated in the accommodating chamber 72. Therefore, the drive unit 10 may be downsized as compared with a case where all the components of the inverter 20 are arranged outside the gear box 12.

Here, in the drive unit 10 according to the present embodiment, all the components of the inverter 20 are accommodated in the accommodating chamber 72 of the gear box 12. Therefore, the size of the drive unit 10 is further reduced compared to a case where a part of the components of the inverter 20 is disposed outside.

In addition, a center of gravity of the drive unit 10 may be lowered as compared with a case where an inverter unit in which a part of the components of the inverter 20 is accommodated is disposed above the motor housing 14 or the gear box housing 50. Accordingly, the drive unit 10 can prevent vibration by preventing lateral oscillation during traveling, and may improve traveling stability.

In addition, in a state in which the drive unit 10 according to the present embodiment is mounted on a vehicle, various gears including the shaft gear 26 (shaft gear 26, intermediate gear 52, and final gear 54) are arranged in a horizontal direction in the gear box 12. The accommodating chamber 72 is located below the shaft gear 26 and is disposed at a portion at a corner side of the gear box 12.

In such a configuration, the components of the inverter 20 are disposed at positions lower than the shaft gear 26. Therefore, the center of gravity of the drive unit 10 may be lowered as compared with a case where the components of the inverter 20 are disposed at positions higher than the shaft gear 26 and an excess space remains below the shaft gear 26. Accordingly, the drive unit 10 can prevent vibration by preventing lateral oscillation during traveling, and may improve traveling stability.

Further, the components of the inverter 20 are disposed in the accommodating chamber 72 formed at the corner side of the gear box 12.

Here, the motor housing 14 and the gear box housing 50 are coupled at the corner 68 in order to increase rigidity, and the components of the inverter 20 are accommodated in the accommodating chamber 72 formed at the corner side of the gear box 12. Therefore, the components of the inverter 20 can be disposed at a corner with high coupling rigidity.

### <First Modification>

Next, a drive unit 200 according to a first modification will be described.

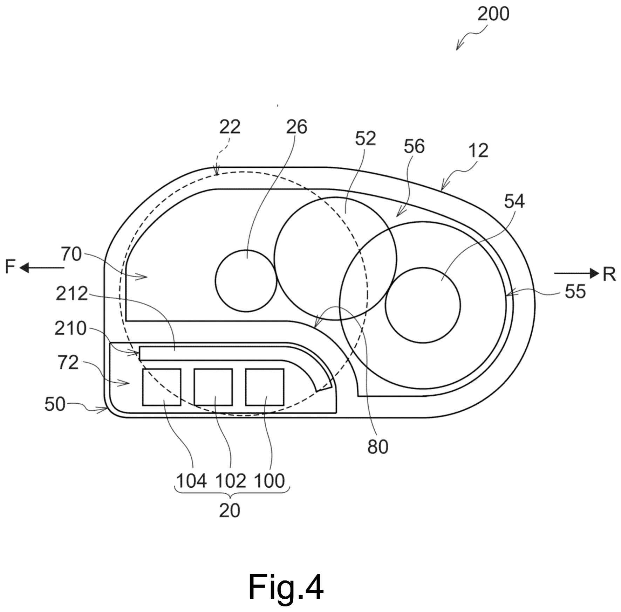

FIG. 4 is a schematic diagram used for describing the drive unit 200 according to the first modification of the present embodiment. In the drive unit 200 according to the first modification, the same or equivalent portions as those of the above-described embodiment are denoted by the same reference numerals and the description thereof is omitted, and only different portions will be described.

As illustrated in FIG. 4, the drive unit 200 according to the first modification is different from the above-described embodiment in that a refrigerant passage 210 is provided in the accommodating chamber 72.

That is, the refrigerant passage 210 through which a refrigerant 212 for cooling the inverter 20 flows is provided in the accommodating chamber 72 of the gear box housing 50. The semiconductor device 102 constituting the inverter 20 is disposed in a state of abutting against the refrigerant passage 210. The refrigerant 212 is, for example, coolant water.

The refrigerant passage 210 is provided along the partition wall 80. The refrigerant passage 210 is formed across the entire region of the accommodating chamber 72 in a vehicle front-rear direction and the vehicle width direction W (see FIG. 1).

The refrigerant passage 210 is connected to, for example, a radiator (not illustrated) provided outside the drive unit 10. The refrigerant 212 circulates between the refrigerant passage 210 and the radiator. The refrigerant 212 cooled by the radiator takes a temperature in the accommodating chamber 72 at the time of passing through the refrigerant passage 210. Accordingly, the components of the inverter 20 that generate heat are cooled, and a temperature rise of the components of the inverter 20 having a heat resistant temperature lower than that of the gear mechanism 56 is suppressed.

In the first modification, a case in which the refrigerant passage 210 is formed over the entire region in the vehicle front-rear direction and the vehicle width direction W in the accommodating chamber 72 will be described, but a formation range of the refrigerant passage 210 is not limited thereto. For example, the position where the refrigerant passage 210 is provided may be determined according to the arrangement of the components of the inverter 20 that need to be cooled.

### (Functions and Effects)

In the first modification configured in this way, the same or equivalent portions as those of the above-described embodiment have the same functions and effects as those of the above-described embodiment.

In the first modification, the gear box 12 is provided with the refrigerant passage 210 through which the refrigerant 212 for cooling the inverter 20 accommodated in the accommodating chamber 72 flows.

In such a configuration, it is possible to cool the components of the inverter 20 in the accommodating chamber 72, to which heat from the operating gear mechanism 56 may be transferred and which is likely to accumulate heat, by the refrigerant 212 in the refrigerant passage 210. Accordingly, a decrease in efficiency of the inverter 20 due to heat is suppressed.

Further, the refrigerant passage 210 is provided along the partition wall 80. The refrigerant passage 210 suppresses heat transfer from the gear mechanism 56 to the inverter 20.

In the present modification, the components accommodated in the accommodating chamber 72 include the semiconductor device 102 constituting the inverter 20, and the semiconductor device 102 is disposed in a state of abutting against the refrigerant passage 210.

In such a configuration, it is possible to promote cooling of the inverter 20 by causing the semiconductor device 102 that generates the largest amount of heat among the components of the inverter 20 to abut against the refrigerant passage 210.

### <Second Modification>

Next, a drive unit 300 according to a second modification will be described.

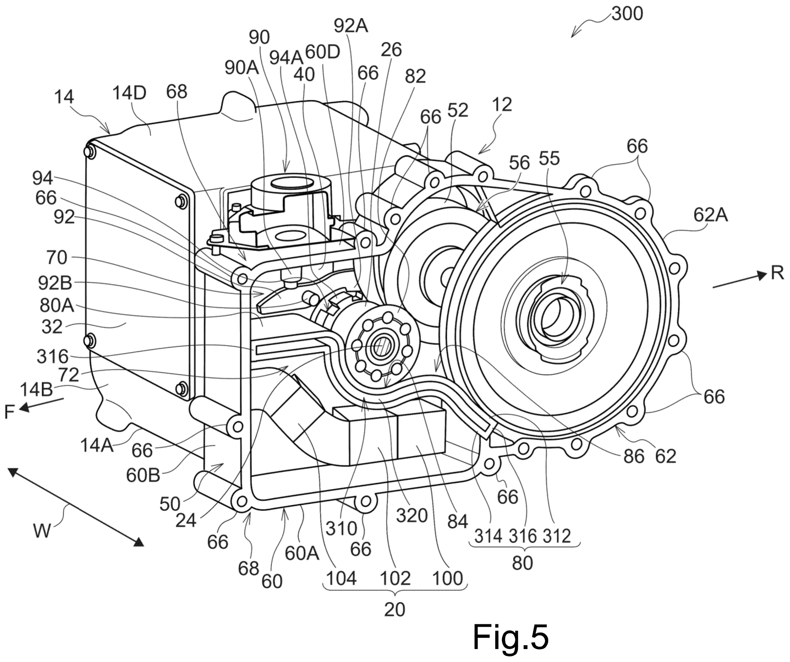

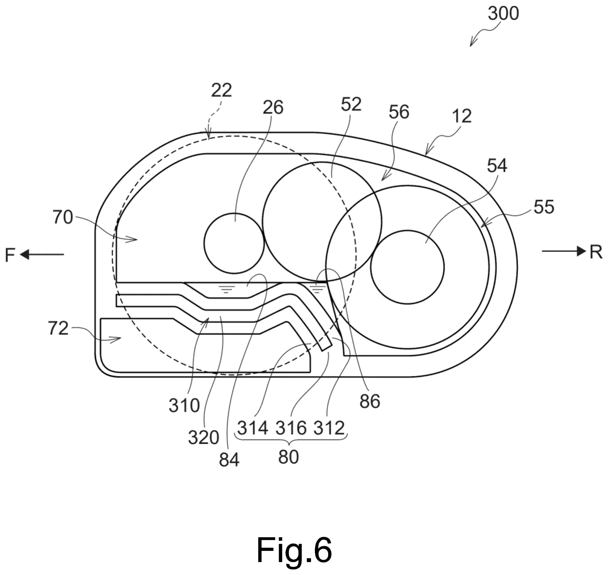

FIG. 5 is a perspective view illustrating the drive unit 300 according to the second modification of the present embodiment, and illustrates a state in which a cover (not illustrated) of the gear box 12 is removed. FIG. 6 is a schematic diagram used for describing a function of a reservoir part (first reservoir part 84) of the drive unit 300 according to the second modification of the present embodiment.

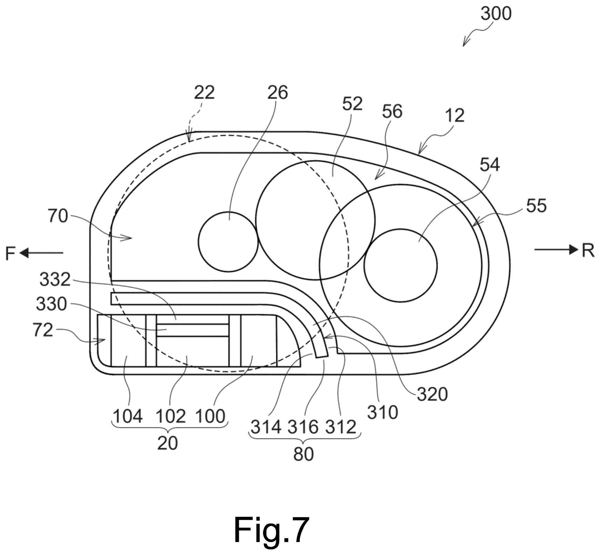

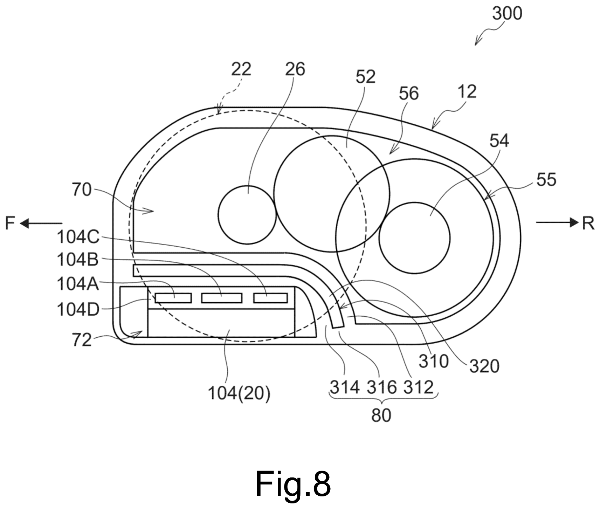

FIG. 7 is a schematic diagram used for describing a function of cooling the semiconductor device 102 of the drive unit 300 according to the second modification of the present embodiment. In FIG. 7, the semiconductor device 102 is exaggerated. FIG. 8 is a schematic diagram used for describing a function of cooling a heat generating component (three-phase electrode part 104) of the drive unit 300 according to the second modification of the present embodiment. In FIG. 8, the three-phase electrode part 104 constituting the heat generating component is exaggerated.

In the drive unit 300 according to the second modification, the same or equivalent portions as those of the above-described embodiment or the first modification will be denoted by the same reference numerals and the description thereof will be omitted, and only different portions will be described.

As illustrated in FIGS. 5 and 6, the drive unit 300 according to the second modification is greatly different from the drive unit according to the above-described embodiment or the first modification in that a partition wall refrigerant passage 310 is formed in the partition wall 80.

That is, the partition wall 80 that partitions the gear chamber 70 and the accommodating chamber 72 has a double structure of a gear chamber side wall surface 312 and an accommodating chamber side wall surface 314. An end of the gear chamber side wall surface 312 and an end of the accommodating chamber side wall surface 314 are coupled by an end wall 316. Accordingly, the partition wall 80 is formed with the partition wall refrigerant passage 310 surrounded by the gear chamber side wall surface 312, the accommodating chamber side wall surface 314, and the end wall 316. In other words, the partition wall 80 constitutes the partition wall refrigerant passage 310.

In the drive unit 300, a refrigerant passage may be provided in the partition wall 40 that partitions the motor housing 14 and the gear box housing 50. In addition, the drive unit 300 may be provided with a refrigerant passage at a portion in the partition wall 40 corresponding to the accommodating chamber 72.

The refrigerant 320 that cools the inside of the accommodating chamber 72 flows through the partition wall refrigerant passage 310. The refrigerant 320 is, for example, coolant water.

The partition wall refrigerant passage 310 is connected to, for example, a radiator (not illustrated) provided outside the drive unit 300. The refrigerant 320 circulates between the partition wall refrigerant passage 310 and the radiator. The refrigerant 320 cooled by the radiator takes a temperature in the accommodating chamber 72 at the time of passing through the partition wall refrigerant passage 310. In addition, the refrigerant 320 cooled by the radiator takes a temperature of the lubricating oil in contact with the gear chamber side wall surface 312.

Further, as illustrated in FIG. 6, the refrigerant 320 exchanges heat with the lubricating oil reserved in the first reservoir part 84 and the second reservoir part 86. Accordingly, the drive unit 300 may efficiently cool the lubricating oil that takes heat from the gear mechanism 56.

In addition, the refrigerant 320 suppresses heat transfer between the gear chamber 70 and the accommodating chamber 72. Accordingly, the refrigerant 320 suppresses a temperature rise of the components of the inverter 20 having a lower heat resistant temperature than the gear mechanism 56.

The semiconductor device 102 accommodated in the accommodating chamber 72 is disposed in a state of abutting against the partition wall 80 provided with the partition wall refrigerant passage 310.

A specific description will be given with reference to FIG. 7, and the semiconductor device 102 includes a semiconductor element 330. The semiconductor element 330 includes a heat radiating plate 332. Fins of the heat radiating plate 332 are in contact with the accommodating chamber side wall surface 314 of the partition wall 80 constituting the partition wall refrigerant passage 310.

The three-phase electrode part 104 accommodated in the accommodating chamber 72 generates heat when energized. The three-phase electrode part 104 constitutes a heat generating component. In addition, the smoothing capacitor 100 accommodated in the accommodating chamber 72 generates heat when energized. The smoothing capacitor 100 constitutes a heat generating component. The heat generating component including the three-phase electrode part 104 or the smoothing capacitor 100 is disposed close to the partition wall refrigerant passage 310.

The three-phase electrode part 104, which is a heat generating component, will be specifically described with reference to FIG. 8. The three-phase electrode part 104, which is a heat generating component, includes three electrodes 104A, 104B, and 104C. Each of the electrodes 104A, 104B, and 104C is disposed close to the accommodating chamber side wall surface 314 of the partition wall 80 constituting the partition wall refrigerant passage 310.

Here, the term "close" refers to a state in which the electrodes 104A, 104B, and 104C of the three-phase electrode part 104 are in contact with the accommodating chamber side wall surface 314 of the partition wall 80 constituting the partition wall refrigerant passage 310 via an insulating layer 104D. In addition, the term "close" refers to a state in which a gap is formed between each of the electrodes 104A, 104B, and 104C of the three-phase electrode part 104 and the accommodating chamber side wall surface 314, and a size of the gap is a size capable of allowing the heat of each of the electrodes 104A, 104B, and 104C to be transmitted to the refrigerant 320 of the partition wall refrigerant passage 310.

When the heat generating component is the smoothing capacitor 100, the smoothing capacitor 100 is disposed close to the partition wall refrigerant passage 310 in a state of being provided on a substrate, as described above.

### (Functions and Effects)

In the second modification configured in this way, the same or equivalent portions as those of the above-described embodiment have the same functions and effects as those of the above-described embodiment.

In the second modification, the partition wall refrigerant passage 310 as a refrigerant passage is provided in the partition wall 80 that separates the gear chamber 70 from the accommodating chamber 72.

Accordingly, the accommodating chamber 72 can be widely used compared to a case where a refrigerant passage is provided in the accommodating chamber 72.

In the present modification, the first reservoir part 84 and the second reservoir part 86 as reservoir parts for lubricating oil that lubricates the shaft gear 26 are provided on a surface of the partition wall 80 on a gear chamber 70 side.

In such a configuration, the lubricating oil that takes away the heat of the gear mechanism 56 including the shaft gear 26 is cooled by heat exchange with the refrigerant 320 of the partition wall refrigerant passage 310 in the reservoir parts 84 and 86. Accordingly, the cooling efficiency of the lubricating oil may be increased as compared with a case where a reservoir part for lubricating oil is not provided.

It is desired that positions or sizes of the respective reservoir parts 84 and 86 are determined according to the partition wall refrigerant passage 310.

In the present modification, the components accommodated in the accommodating chamber 72 include the semiconductor device 102 constituting the inverter 20, and the semiconductor device 102 is disposed in a state of abutting against the partition wall refrigerant passage 310 as a refrigerant passage. That is, the components accommodated in the accommodating chamber 72 include the semiconductor device 102 constituting the inverter 20, and the semiconductor device 102 is disposed in a state of abutting against the partition wall 80 constituting the partition wall refrigerant passage 310.

In such a configuration, it is possible to promote cooling of the inverter 20 by causing the semiconductor device 102 that generates the largest amount of heat among the components of the inverter 20 to abut against the partition wall 80 constituting the partition wall refrigerant passage 310.

In the present modification, the cooling efficiency of the semiconductor device 102 may be increased by bringing the fins of the heat radiating plate 332 of the semiconductor element 330 constituting the semiconductor device 102 into contact with the accommodating chamber side wall surface 314 of the partition wall 80 constituting the partition wall refrigerant passage 310.

In the present modification, the components accommodated in the accommodating chamber 72 include a heat generating component including the three-phase electrode part 104 or the smoothing capacitor 100 that connects the inverter 20 and the motor 22.

In such a configuration, it is possible to promote cooling of the heat generating components constituting the inverter 20.

The embodiment and the modifications of the present invention have been described above, but the embodiment and the modifications merely show a part of the application examples of the present invention, and the technical scope of the present invention is not limited to the specific configurations of the embodiment and the modifications.

The drive units 10, 200, and 300 according to the present embodiment and the modifications described above have been described using an example of an electric vehicle that travels by being driven by the motor 22 with electric power of a battery, but the drive units 10, 200, and 300 are not limited thereto. For example, a vehicle provided with an engine may be a series hybrid automobile that drives the motor 22 by electric power generated by the engine.

## Claims

1. A drive unit to be mounted on a vehicle, the drive unit comprising:
an inverter;
a motor configured to receive supply of electric power from the inverter;
a gear box having a shaft gear provided on a shaft of the motor, the inverter, the motor, and the gear box being unitized;
a gear chamber provided in the gear box and configured to accommodate the shaft gear having a diameter smaller than an outer diameter dimension of the motor; and
an accommodating chamber provided in the gear box and formed as a space different from the gear chamber due to a dimensional difference between the outer diameter dimension of the motor and an outer diameter dimension of the shaft gear, wherein
at least a part of components of the inverter is accommodated in the accommodating chamber.

2. The drive unit according to claim 1, wherein
in a state of being mounted on the vehicle,
various gears including the shaft gear are arranged in a horizontal direction in the gear box, and
the accommodating chamber is located below the shaft gear and is disposed at a portion at a corner side of the gear box.

3. The drive unit according to claim 1, wherein
the gear box is provided with a refrigerant passage configured to allow a refrigerant for cooling the inverter accommodated in the accommodating chamber to flow therethrough.

4. The drive unit according to claim 3, wherein
the refrigerant passage is provided in a partition wall that separates the gear chamber and the accommodating chamber.

5. The drive unit according to claim 4, wherein
a reservoir part for lubricating oil for lubricating the shaft gear is provided on a surface of the partition wall on a gear chamber side.

6. The drive unit according to claim 3, wherein
the components accommodated in the accommodating chamber include a semiconductor device constituting the inverter, and the semiconductor device is disposed in a state of abutting against the refrigerant passage.

7. The drive unit according to claim 4 or 5, wherein
the components accommodated in the accommodating chamber include a semiconductor device constituting the inverter, and the semiconductor device is disposed in a state of abutting against the partition wall.

8. The drive unit according to any one of claims 3 to 6, wherein
the components accommodated in the accommodating chamber include a heat generating component including a three-phase electrode part or a smoothing capacitor that connects the inverter and the motor.
